# EUROPÄISCHE PATENTSCHRIFT

(11) **EP 2 205 467 B1**
(45) Veröffentlichungstag und Bekanntmachung des Hinweises auf die Patenterteilung: **11.12.2013**
(21) Anmeldenummer: 09759690.2
(22) Anmeldetag: 22.10.2009
(51) Int. Cl.: B60R 21/217

(54) **AIRBAGMODUL MIT EINEM GASSACK UND EINEM AN EINEM MODULGEHÄUSE BEFESTIGBAREN ROHRGASGENERATOR**
AIRBAG MODULE HAVING AN AIRBAG AND A TUBULAR GAS GENERATOR THAT CAN BE FASTENED TO A MODULE HOUSING
MODULE DE COUSSIN GONFLABLE AVEC UN SAC GONFLABLE ET UN GÉNÉRATEUR DE GAZ TUBULAIRE POUVANT ÊTRE FIXÉ SUR UN BOÎTIER DU MODULE

(30) Priorität: 07.11.2008 DE 102008056946
(43) Veröffentlichungstag der Anmeldung: 14.07.2010
(73) Patentinhaber: Takata AG, 63743 Aschaffenburg (DE)
(72) Erfinder: HAMELS, Stefan, 63743 Aschaffenburg (DE); FECHNER, Tobias, 63473 Aschaffenburg (DE); GROSS, Frank, 63739 Aschaffenburg (DE); KEMPE, Christian, 63743 Aschaffenburg (DE)
(74) Vertreter: Müller, Wolfram Hubertus
(86) Internationale Anmeldenummer: PCT/EP2009/063869
(87) Internationale Veröffentlichungsnummer: WO 2010/052131

(56) Entgegenhaltungen:
- WO-A-2006/079330
- DE-A1-102005 004 451
- DE-U1-202005 019 368
- US-A- 5 577 764

## Beschreibung

Die Erfindung betrifft ein Airbagmodul mit einem an seinem Modulgehäuse befestigbaren Rohrgasgenerator nach dem Oberbegriff des Anspruchs 1. Ein solches Airbagmodul ist aus der WO 2006/079330 A1 bekannt.

Der Erfindung liegt die Aufgabe zugrunde, eine Befestigungseinrichtung für einen Rohrgasgenerator zu schaffen, der Gasaustrittsöffnungen an seinem Umfang aufweist.

Erfindungsgemäß wird das gemäß den Merkmalen des Anspruchs 1 erreicht.

Bei einem Airbagmodul mit einem Gassack und mit einem an einem Modulgehäuse befestigbaren Rohrgasgenerator, der an seinem Umfang Gasaustrittsöffnungen aufweist, ist der Rohrgasgenerator erfindungsgemäß mittels lediglich eines über den Rohrgasgenerator und über einen Abschnitt des Modulgehäuses bewegbaren Klemmrings am Modulgehäuse fixierbar. Diese Anordnung ermöglicht in einfacher Weise die Befestigung eines Rohrgasgenerators, wobei diese Befestigungsart einen geringen Bauraum beansprucht.

Beim Zusammenbau des Airbagmoduls wird der Klemmring (GG-Verrastring) vorzugsweise über ein Ende des Gaserzeugers (GG) geschoben. Dann wird vorzugsweise die Seite des GG auf der kein Verrastring sitzt, schräg von oben in eine Öffnung im Modulgehäuse geschoben. Während des Einschiebens wird der GG mit der Seite des Ringes nach unten ins Modulgehäuse gedrückt. Hat der GG eine horizontale Lage im Gehäuse erreicht, kann er mit einem Werkzeug radial und axial (d.h., entlang seiner Längsachse) ausgerichtet werden. Ist das geschehen, wird der verrastbare Ring nach innen verschoben. Da er vorzugsweise auf einer schiefen Ebene läuft, senkt sich der Ring beim Verschieben ab und klemmt so den Gasgenerator fest. Auf der Seite ohne Ring bietet vorzugsweise ein Federmittel bzw. Federelemente am Gehäuse den notwendigen halt und verhindern ein Klappern des Gasgenerators im Modulgehäuse.

Es ist auch denkbar, den Luftsack (Gassack) um den Gaserzeuger (Gasgenerator) zu legen und beim Verrasten des Ringes somit den Luftsack mit zu befestigen. Dies gilt dann allerdings nicht für die Vakuumfaltung.

Vorzugsweise ist das Federmittel aus einer Mehrzahl separater Federelemente gebildet, die quer zur Längsachse des Rohrgasgenerators hintereinander angeordnet sind, so dass Sie in ihrer Gesamtheit den Rohrgasgenerator quer zu dessen Längsachse abschnittsweise umlaufen, insbesondere um 180°.

Im Hinblick auf die Gegenstände der Ansprüche 1 bis 11 ist vorzugsweise vorgesehen, dass der den Boden übergreifende verlängerte Abschnitt des Klemmrings eine geringere Dicke als ein mittlerer Abschnitt des Klemmrings aufweist, und dass vorzugsweise der die Auflage untergreifende verlängerte Abschnitt des Klemmrings eine geringere Dicke als der mittlere Abschnitt des Klemmrings aufweist.

Im Hinblick auf den Gegenstand des Anspruchs 13 ist vorzugsweise vorgesehen, dass das Modulgehäuse zwei Rastnasen und der Klemmring zwei zugeordnete verformbare Rasthaken aufweist

Schließlich ist vorzugsweise ein Gassack in Form eines vakuumgefalteten Gassacks gesondert im Modulgehäuse befestigt.

Die Erfindung soll in Ausführungsbeispielen anhand der Zeichnungen 1 bis 18 erläutert werden.

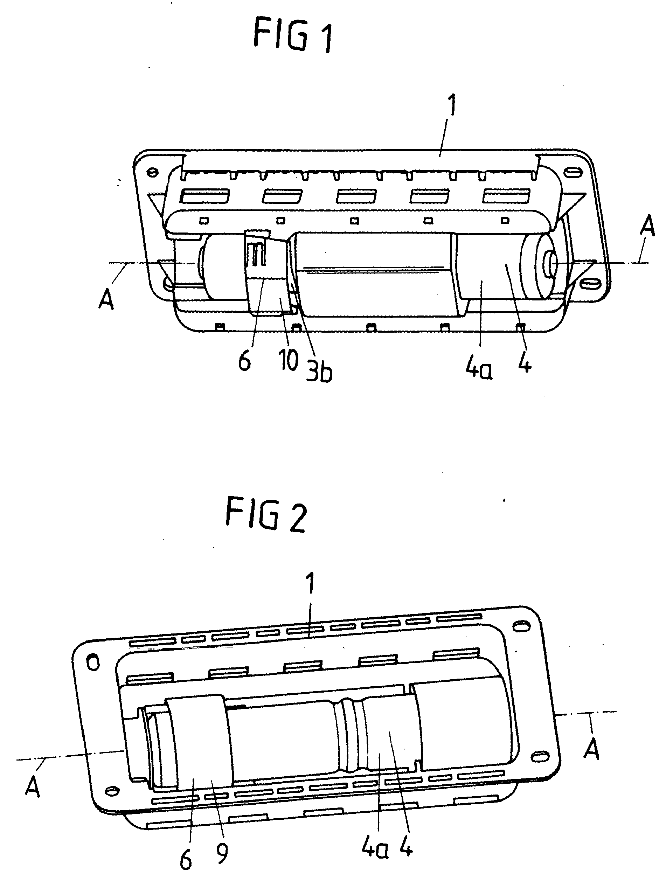

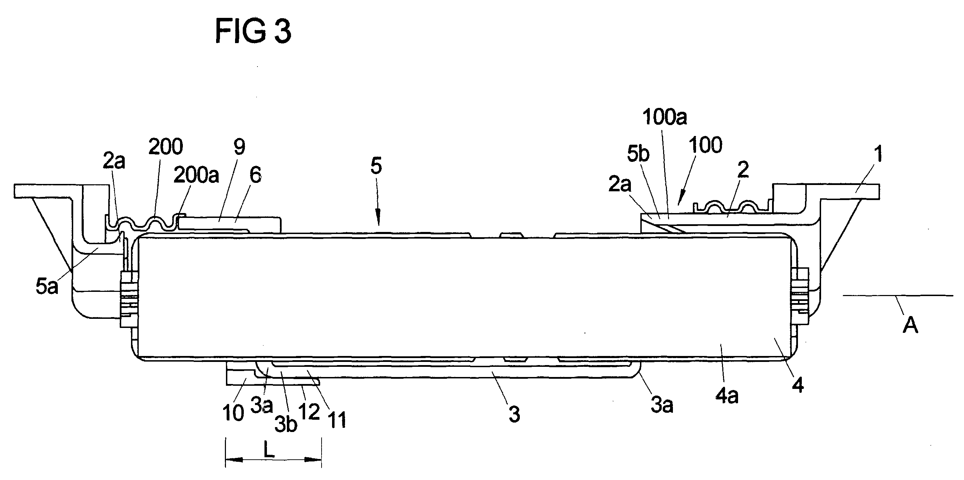

In den Längsschnitten gemäß Figuren 3, 5, 6, 7, 8, 9, 10, 11 und 16 ist der untere Abschnitt eines Modulgehäuses 1 dargestellt, das einen Boden 2 und eine Auflage 3 für einen Rohrgasgenerator 4 aufweist.

Das Modulgehäuse 1 weist weiterhin im Boden 2 eine Öffnung 5 auf, die so bemessen ist, dass der Rohrgasgenerator 4 von oben durch den Boden 2 auf die Auflage 3 gelegt werden kann. Zur Befestigung des Rohrgasgenerators 4 am Modulgehäuse 1 ist lediglich ein Klemmring 6 vorgesehen, der innen an die Geometrie des Rohrgasgenerators 4 angepasst ist. Z.B. zeigt die Fig. 3 den Rohrgasgenerator 4 nach seiner Fixierung durch den Klemmring 6. Der Klemmring 6 weist einen mittleren Abschnitt 8, einen oberen verlängerten Abschnitt 9 sowie einen unteren verlängerten Abschnitt 10 auf.

Der mittlere Abschnitt 8 und der untere verlängerte Abschnitt 10 des Klemmrings 6 weisen zusammen eine Länge L auf, die kleiner ist als der Abstand der Kanten 2a des Bodens 2 und der Kanten 3a der Auflage 3 in Richtung der Längsachse A des Rohrgasgenerators 4. Die verlängerten Abschnitte 9, 10 weisen eine geringere Dicke als der mittlere Abschnitt 8 auf.

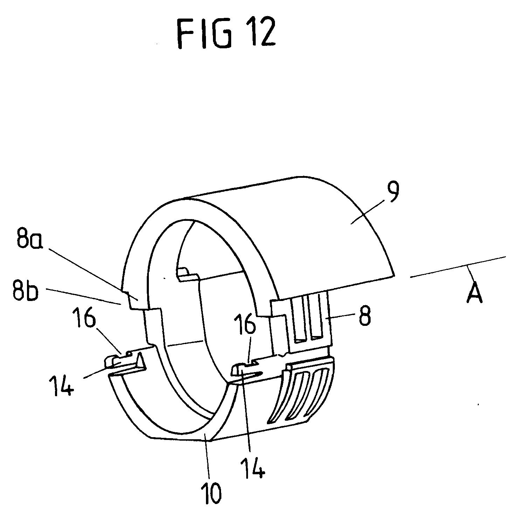

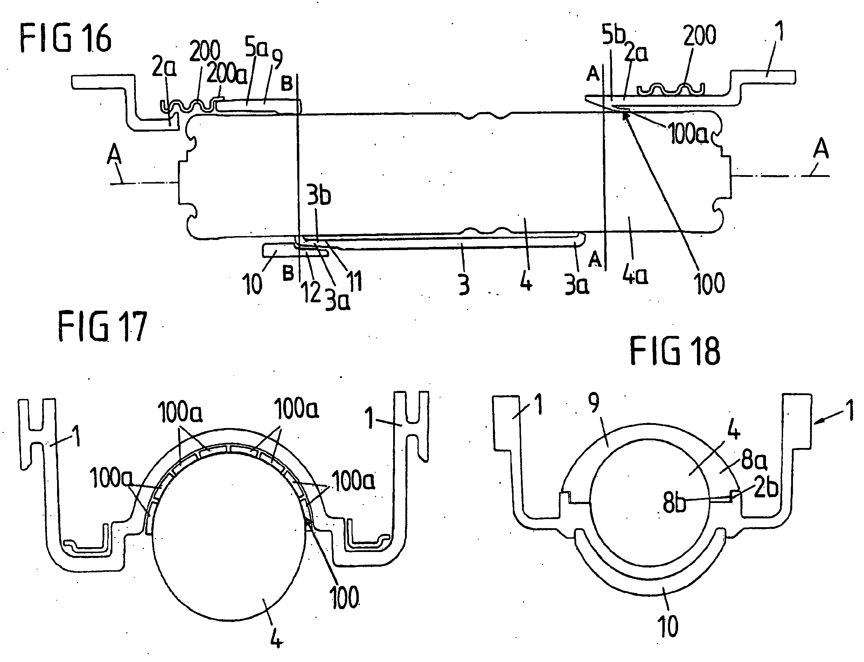

Der mittlere Abschnitt 8 weist oben einen bei Montage des Klemmringes 6 in Richtung der Mitte des Rohrgasgenerators 4 weisenden Überstand 8a auf. In diesem ist eine Ausnehmung 8b vorgesehen, in die ein Vorsprung 2b des Bodens 2 eingreift. Dadurch wird bei der Montage ein Verdrehen des Klemmrings 6 verhindert (vgl. z.B. Figuren 12 und 18).

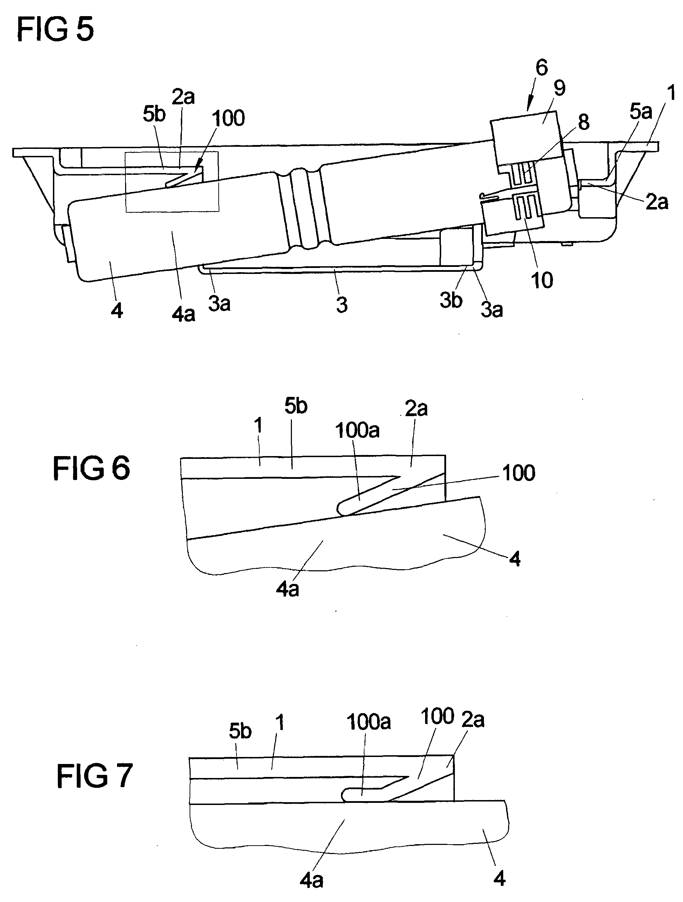

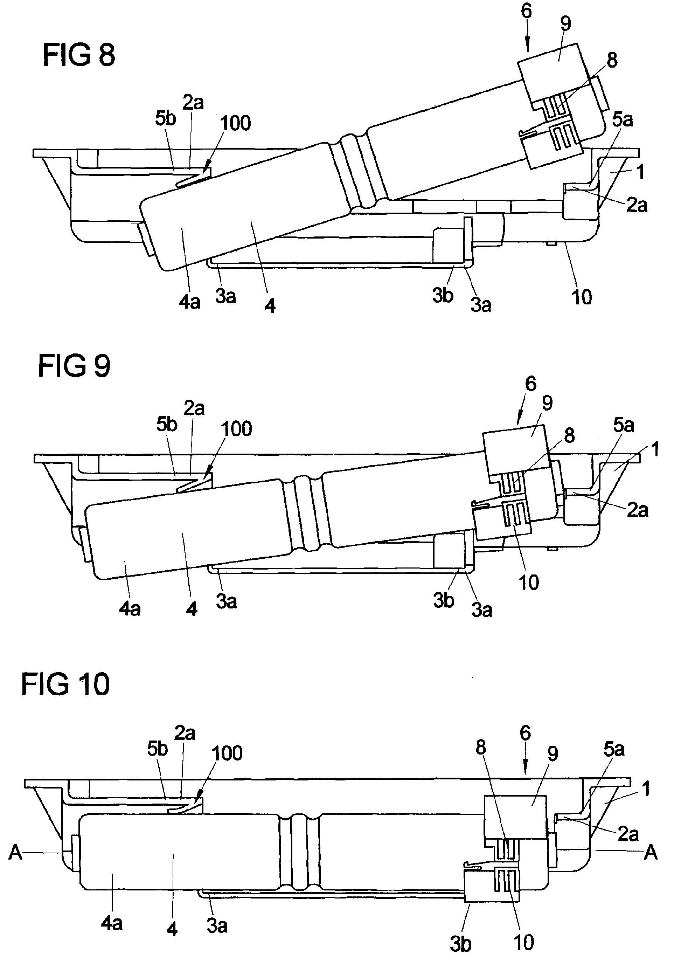

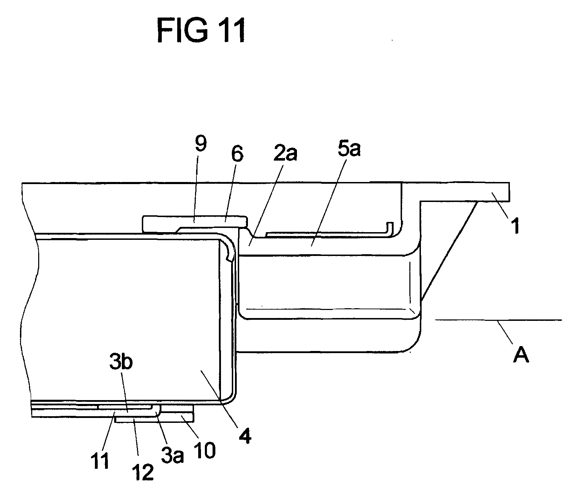

Die Montage des Rohrgasgenerators 4 erfolgt in der Weise, dass zunächst der Klemmring 6 auf den Rohrgasgenerator 4 geschoben wird, wie es z.B. in Fig. 5 bzw. Fig.8 dargestellt ist, wobei der mittlere Abschnitt 8 ggf. in etwa mit dem jeweiligen Ende des Rohrgasgenerators 4 abschließt. Einerseits wird dadurch und wegen der genannten Länge der Abschnitte 8, 10 ermöglicht, dass der Rohrgasgenerator 4 durch die Öffnung 5 in das Modulgehäuse 1 bis zur Auflage 3 eingeführt werden kann (vgl. Figur 9) und andererseits wird wegen des oberen verlängerten Abschnitts 9 ggf. ein Übergriff des Klemmrings 6 über den Böden 2 erreicht (vgl. Figur 11). Anschließend wird der Klemmring 6 in Richtung der Mitte des Rohrgasgenerators 4 verschoben, so dass der verlängerte Abschnitt 10 unter die Auflage 3 greift (vgl. Figur 10).

Dabei kann der Abschnitt 10 elastisch verformt und der Rohrgasgenerator 4 geklemmt werden. Da der Abschnitt 9 weiterhin den Boden 2 des Modulgehäuses 1 übergreift (vgl. Figur 11) oder unter einen Randbereich 200a eines Halteelements 200 zum Befestigen eines Gassackes am Modulgehäuse 1 greift (vgl. z.B. Figur 16), wird eine Abdichtung zwischen der Kante 2a und dem verlängerten Abschnitt 9 erzielt. Die Auflage 3 ist an ihrem Ende 11 so ausgebildet, dass in Klemmstellung des Klemmrings 6 eine Dichtwirkung zwischen dem Rohrgasgenerator 4 und der Auflage 3 und insbesondere deren Kante 3a erzielt wird, und dass der Klemmring 6 eine Abdichtfläche gegen den oberen Abschnitt des Rohrgasgenerators 4 aufweist. Die Dichtfläche ist in bekannter Weise ausgebildet, wobei die Dichtfläche zwischen der Kante 2a und dem verlängerten Abschnitt 9 auch so ausgebildet sein kann, dass zwischen beiden noch ein geringer Spalt vorhanden ist.

Die Befestigung des Gassacks kann unterschiedlich erfolgen. So kann der nicht dargestellte Gassack den Rohrgasgenerator 4 umschlingen, so dass er in der Klemmstellung des Klemmrings 6 zwischen dem Rohrgasgenerator 4 und der Auflage 3 fixiert ist. Ein ebenfalls nicht dargestellter vakuumgefalteter Gassack kann in bekannter Weise gesondert im Modulgehäuse 1 befestigt sein, insbesondere über das besagte Halteelement 200.

Gemäß Figur 16 weist die Auflage 3 vorzugsweise ein Ende 11 auf, das sich außen verjüngt und im Schnitt deshalb keilförmig verläuft. In der Fig. 16 ist dieses Ende 11 im Schnitt dargestellt. Der Klemmring 6 ist an einem Ende 12, das der Auflage 3 zugewandt ist, innen ebenfalls verjüngt, so dass es im Schnitt gesehen deshalb ebenfalls keilförmig verläuft. In der Fig. 16 ist das Ende 12 im Schnitt dargestellt. Bei dieser Ausführungsform wird der Klemmring 6 beim Verschieben zur Mitte des Rohrgasgenerators 4 hin wegen des keilförmigen Verlaufs der Enden 11, 12 etwas abgesenkt, wodurch der Rohrgasgenerator 4 gegen die Auflage 3 gedrückt und somit verklemmt wird.

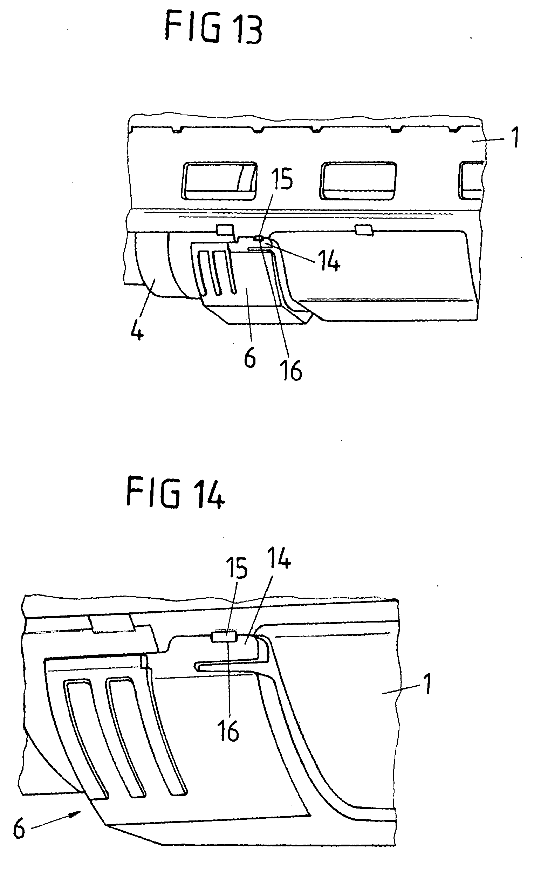

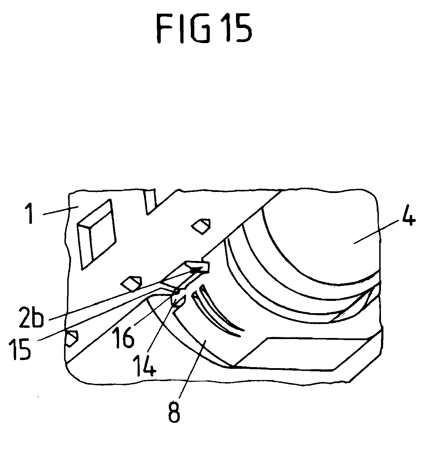

Gemäß Figur 12 weist der Klemmring 6 vorzugsweise einen elastisch verformbaren Rasthaken 14 auf, dem eine Nase 15 am Modulgehäuse 1 zugeordnet ist (vgl. Figur 13-15). Beim Verschieben des Klemmringes 6 in Richtung der Mitte des Rohrgasgenerators 4 wird der Rasthaken 14 nach unten gedrückt, bis die Nase 15 in einen Ausschnitt 16 (Figuren 14 und 12) des Rasthakens 14 eingreift. In dieser Stellung federt der Rasthaken 14 zurück und der Klemmring 6 ist verrastet.

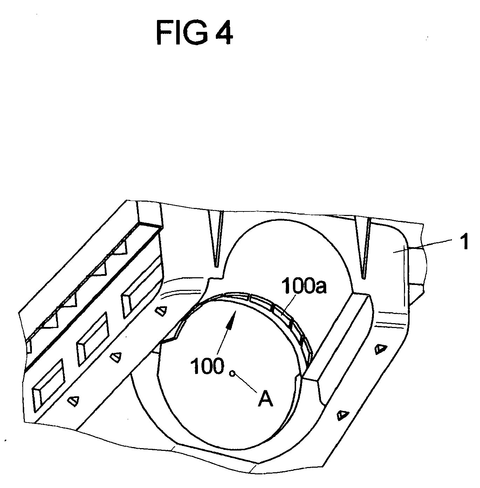

An der Kante 2a des Bodens 2, die der dem Klemmring 6 zugeordneten Kante 2a des Bodens 2 entlang der Längsachse A des Rohrgasgenerators 4 gegenüberliegt, ist ein Federmittel 100 vorgesehen (vgl. beispielsweise Figur 4 bis 7), dass den Gasgenerator 4 (Rohrgasgenerator) bevorzugt um 180° umläuft und aus separaten Federelementen 100a gebildet sein kann. In der horizontalen Lage des Rohrgasgenerators 4 gemäß Figur 10 spannt jenes Federmittel 100 den Rohrgasgenerator 4 gegen die Auflage 3 vor.

Vorzugsweise ist das Federmittel 100 bzw. sind die Federelemente 100a einstückig an den Boden 2 angeformt.

## Patentansprüche

1. Airbagmodul mit einem Gassack und mit einem an einem Modulgehäuse befestigbaren Rohrgasgenerator, der an seinem Umfang Gasaustrittsöffnungen aufweist, wobei der Rohrgasgenerator (4) mittels lediglich eines über den Rohrgasgenerator (4) und über einen Abschnitt (2) des Modulgehäuses bewegbaren Klemmrings (6) am Modulgehäuse (1) fixierbar ist, wobei der Klemmring (6) der Geometrie des Rohrgenerators und des Modulgehäuses angepasst ist und in axialer Richtung voneinander getrennte und axial in die entgegengesetzte Richtung verlaufende verlängerte Abschnitte (9, 10) aufweist, und wobei dass Modulgehäuse (1) in seinem Boden (2) eine Öffnung (5) für das Einführen des Rohrgasgenerators (4) aufweist,
**dadurch gekennzeichnet,**
**dass** am Modulgehäuse (1) unterhalb dieser Öffnung (5) eine Auflage (3) für den Rohrgasgenerator (4) vorgesehen ist, und wobei der Klemmring (6) so ausgebildet ist, dass er nach dem Positionieren des Rohrgasgenerators (4) mit dem verlängerten Abschnitt (10) durch axiales Verschieben in Richtung der Mitte des Rohrgasgenerators (4) unter die Auflage (3) greift.

2. Airbagmodul nach Anspruch 1, **dadurch gekennzeichnet, dass** die Auflage (3) eine geringere Länge als der Rohrgasgenerator (4) aufweist.

3. Airbagmodul nach Anspruch 1 oder 2, **dadurch gekennzeichnet, dass** der Klemmring (6) so ausgebildet ist, dass er nach dem Positionieren des Rohrgasgenerators (4) durch axiales Verschieben in Richtung der Mitte des Rohrgasgenerators (4) mit dem anderen verlängerten Abschnitt (9) über den Boden (2) des Modulgehäuses (1) und/oder unter ein Halteelement (200) greift, mit dem der Gassack am Modulgehäuse (1) befestigbar ist.

4. Airbagmodul nach Anspruch 1, 2 oder 3, **dadurch gekennzeichnet, dass** an einem Randbereich (5b) der Öffnung (5) des Bodens (2) ein Federmittel (100) vorgesehen ist, das einen freien Endabschnitt (4a) des Rohrgasgenerators (4) gegen die Auflage (3) vorspannt.

5. Airbagmodul nach Anspruch 4, **dadurch gekennzeichnet, dass** das Federmittel (100) einstückig an das Modulgehäuse (1) angeformt ist.

6. Airbagmodul nach Anspruch 4 oder 5, **dadurch gekennzeichnet, dass** das Federmittel (100) den Rohrgasgenerator (4) quer zu dessen Längsachse (A) abschnittsweise umläuft, insbesondere um 180°.

7. Airbagmodul nach einem der Ansprüche 1 bis 6, **dadurch gekennzeichnet, dass** der Klemmring (6) so ausgebildet ist, dass er nach dem Positionieren des Rohrgasgenerators (4) einerseits mit dem verlängerten Abschnitt (10) durch axiales Verschieben in Richtung der Mitte des Rohrgasgenerators (4) unter einen Randbereich (3b) der Auflage (3) greift und andererseits mit dem anderen verlängerten Abschnitt (9) über einen weiteren Randbereich (5a) der Öffnung des Bodens (2) des Modulgehäuses (1) und/oder unter einen Randbereich (200a) eines Halteelementes (200) greift, mit dem der Gassack an dem Modulgehäuse (1) befestigbar ist.

8. Airbagmodul nach den Ansprüchen 4 und 7, **dadurch gekennzeichnet, dass** der eine Randbereich (5b) der Öffnung (5) des Bodens (2) dem Randbereich (3b) der Auflage (3), dem weiteren Randbereich (5a) der Öffnung (5) des Bodens (2) und/oder dem Randbereich (200a) des Halteelementes (200) entlang der Längsachse (A) des Rohrgasgenerators (4) gegenüberliegt.

9. Airbagmodul nach mindestens einem der vorhergehenden Ansprüche, **dadurch gekennzeichnet, dass** ein mittlerer Abschnitt (8) und der untere, der Auflage (3) zugeordnete, verlängerter Abschnitt (10) des Klemmrings (6) zusammen eine Länge (L) aufweisen, die kleiner ist als der Abstand der Kanten (2a) des Bodens (2) und der Kanten (3a) der Auflage (3) in Richtung der Längsachse (A) des Rohrgasgenerators (4).

10. Airbagmodul nach einem der Ansprüche 1 bis 9, **dadurch gekennzeichnet, dass** die Auflage (3) an ihren Enden (11) und der zugeordnete verlängerte Abschnitt (10) des Klemmrings (6) eine Schräge aufweist, so dass durch das Verschieben des Klemmrings (6) in Richtung der Mitte des Rohrgasgenerators (4) der Rohrgasgenerator (4) zwischen der Auflage (3) und einem oberen Bereich (6a) des Klemmrings (6) klemmbar ist.

11. Airbagmodul nach mindestens einem der vorhergehenden Ansprüche, **dadurch gekennzeichnet, dass** einerseits der Klemmring (6) und das Modulgehäuse (1) so ausgebildet sind, dass eine Abdichtung zwischen diesen an Kanten (2a) des Bodens (2) erfolgt, und dass andererseits der Klemmring (6) und das Modulgehäuse (1) so ausgebildet sind, dass die Abdichtung zwischen diesen und dem Rohrgasgenerator (4) an Kanten (3a) der Auflage (3) und an Kanten eines Überstands (8a) des Klemmrings (6) erzielt wird.

12. Airbagmodul nach mindestens einem der vorhergehenden Ansprüche, **dadurch gekennzeichnet, dass** der Klemmring (6) gegenüber dem Modulgehäuse (1) verrastbar ist.

13. Airbagmodul nach Anspruch 12, **dadurch gekennzeichnet, dass** das Modulgehäuse (1) mindestens eine Rastnase (15) und der Klemmring (6) mindestens einen zugeordneten verformbaren Rasthaken (14) aufweist.

14. Airbagmodul nach mindestens einem der vorhergehenden Ansprüche, **dadurch gekennzeichnet, dass** der Gassack den Rohrgasgenerator (4) umschlingt und in der Klemmstellung des Klemmrings (6) zwischen dem Rohrgasgenerator (4) und der Auflage (3) fixiert ist.

## Claims

1. Airbag module with an airbag and a tubular gas generator that can be fastened to a module housing, wherein said tubular gas generator having gas outlet openings along the periphery thereof, wherein the tubular gas generator (4) can be fastened to the module housing (1) by means of only a clamping ring (6) that is movable over the tubular gas generator (4) and over a section (2) of the module housing, wherein the clamping ring (6) is adapted to the geometry of the tubular generator and of the module housing and has elongated sections (9, 10) being separated from each other in axial direction and continuing axial in the opposite direction, and wherein the module housing (1) has in its bottom (2) an opening (5) for inserting the tubular gas generator (4),
**characterized in that**
on the module housing (1) below this opening (5) a support (3) for the tubular gas generator (4) is provided, and wherein the clamping ring (6) is designed such that said clamping ring reaches below the support (3) after positioning the tubular gas generator (4) with the elongated section (10) by axial moving in direction of the centre of the tubular gas generator (4).

2. Airbag module according to claim 1, **characterized in that** the support (3) has a lesser length than the tubular gas generator (4).

3. Airbag module according to claim 1 or 2, **characterized in that** the clamping ring (6) is designed such that said clamping ring after the positioning of the tubular gas generator (4) by axial moving in direction of the centre of the tubular gas generator (4) reaches with the other elongated section (9) over the bottom (2) of the module housing (1) and/or under a retaining member (200) with which the airbag can be fastened to the module housing (1).

4. Airbag module according to claim 1, 2 or 3, **characterized in that** on an edge area (5b) of the opening (5) of the bottom (2) a spring means (100) is provided that preloads a free end section (4a) of the tubular gas generator (4) against the support (3).

5. Airbag module according to claim 4, **characterized in that** the spring means (100) is formed in one piece to the module housing (1).

6. Airbag module according to claim 4 or 5, **characterized in that** the spring means (100) revolves sectionally around the tubular gas generator (4) across to its longitudinal axis (A), in particular around 180 degrees.

7. Airbag module according to one of the claims 1 to 6 **characterized in that** the clamping ring (6) is designed such that said clamping ring after the positioning of the tubular gas generator (4) reaches on one hand with the elongated section (10) by axial moving in direction of the centre of the tubular gas generator (4) under an edge section (3b) of the support (3) and on the other hand reaches with the other elongated section (9) over a further edge section (5a) of the opening of the bottom (2) of the module housing (1) and/or under an edge section (200a) of a retaining member (200) with which the airbag can be fastened to the module housing (1).

8. Airbag module according to the claims 4 and 7, **characterized in that** the one edge section (5b) of the opening (5) of the bottom (2) is opposite to the edge section (3b) of the support (3), the further edge section (5a) of the opening (5) of the bottom (2) and/or the edge section (200a) of the retaining member (200) along the longitudinal axis (A) of the tubular gas generator (4).

9. Airbag module according to at least one of the proceeding claims, **characterized in that** a centre section (8) and the lower elongated section (10) of the clamping ring (6) assigned to the support (3) have together a length (L) which is smaller than the distance of the edges (2a) of the bottom (2) and the edges (3a) of the support (3) in direction of the longitudinal axial (A) of the tubular gas generator (4).

10. Airbag module according to one of the claims 1 to 9, **characterized in that** the support (3) on the ends (11) thereof and the assigned elongated section (10) of the clamping ring (6) have a slant so that by the moving of the clamping ring (6) in direction of the centre of the tubular gas generator (4) the tubular gas generator (4) can be clamped between the support (3) and an upper section (6a) of the clamping ring (6).

11. Airbag module according to at least one of the proceeding claims, **characterized in that** on one hand the clamping ring (6) and the module housing (1) are designed such that a sealing between both occurs on edges (2a) of the bottom (2), and that on the other hand the clamping ring (6) and the module housing (1) are designed such that the sealing between both and the tubular gas generator (4) is obtained on edges (3a) of the support (3) and on edges of an overhang (8a) of the clamping ring (6).

12. Airbag module according to at least one of the proceeding claims, **characterized in that** the clamping ring (6) can be latched in respect to the module housing (1).

13. Airbag module according to claim 12, **characterized in that** the module housing (1) has at least one latch nose (15) and the clamping ring (6) has at least one assigned deformable latch hook (14).

14. Airbag module according to at least one of the proceeding claims, **characterized in that** the airbag loops around the tubular gas generator (4) and is fixated in the clamping position of the clamping ring (6) between the tubular gas generator (4) and the support (3).

## Revendications

1. Module de coussin gonflable avec un sac gonflable et un générateur de gaz tubulaire qui peut être fixé sur un boîtier de module et qui présente sur sa périphérie des ouvertures de sortie de gaz, le générateur de gaz tubulaire (4) pouvant être fixé sur le boîtier de module (1) juste à l'aide d'un anneau de serrage (6) mobile sur le générateur de gaz tubulaire (4) et sur une section (2) du boîtier de module, l'anneau de serrage (6) étant adapté à la géométrie du générateur tubulaire et du boîtier de module et présentant des sections (9, 10) allongées séparées les unes des autres dans la direction axiale et s'étendant axialement dans la direction opposée, et le boîtier de module (1) présentant en son fond (2) une ouverture (5) pour l'introduction du générateur de gaz tubulaire (4),
**caractérisé en ce qu'**un support (3) pour le générateur de gaz tubulaire (4) est prévu sur le boîtier de module (1) sous cette ouverture (5) et l'anneau de serrage (6) étant réalisé de sorte qu'il vienne en prise sous le support (3) avec la section (10) allongée par déplacement axial en direction du milieu du générateur de gaz tubulaire (4) après le positionnement du générateur de gaz tubulaire (4).

2. Module de coussin gonflable selon la revendication 1, **caractérisé en ce que** le support (3) présente une longueur moindre que le générateur de gaz tubulaire (4).

3. Module de coussin gonflable selon la revendication 1 ou 2, **caractérisé en ce que** l'anneau de serrage (6) est réalisé de sorte qu'il vienne en prise sur le fond (2) du boîtier de module (1) et/ou sous un élément de retenue (200), avec lequel le sac gonflable peut être fixé sur le boîtier de module (1), avec l'autre section (9) allongée par déplacement axial en direction du milieu du générateur de gaz tubulaire (4) après le positionnement du générateur de gaz tubulaire (4).

4. Module de coussin gonflable selon la revendication 1, 2 ou 3, **caractérisé en ce qu'**un moyen de ressort (100) est prévu sur une zone de bord (5b) de l'ouverture (5) du fond (2), lequel précontraint une section d'extrémité libre (4a) du générateur de gaz tubulaire (4) contre le support (3).

5. Module de coussin gonflable selon la revendication 4, **caractérisé en ce que** le moyen de ressort (100) est formé d'un seul tenant sur le boîtier de module (1).

6. Module de coussin gonflable selon la revendication 4 ou 5, **caractérisé en ce que** le moyen de ressort (100) entoure par section le générateur de gaz tubulaire (4) transversalement à son axe longitudinal (A), en particulier de 180°.

7. Module de coussin gonflable selon l'une quelconque des revendications 1 à 6, **caractérisé en ce que** l'anneau de serrage (6) est réalisé de sorte qu'il vienne en prise d'un côté sous une zone de bord (3b) du support (3) avec la section (10) allongée par déplacement axial en direction du milieu du générateur de gaz tubulaire (4) et de l'autre côté sur une autre zone de bord (5a) de l'ouverture du fond (2) du boîtier de module (1) et/ou sous une zone de bord (200a) d'un élément de retenue (200), avec lequel le sac gonflable peut être fixé sur le boîtier de module (1), avec l'autre section allongée (9) après le positionnement du générateur de gaz tubulaire (4).

8. Module de coussin gonflable selon les revendications 4 et 7, **caractérisé en ce que** l'une zone de bord (5b) de l'ouverture (5) du fond (2) fait face à la zone de bord (3b) du support (3), à l'autre zone de bord (5a) de l'ouverture (5) du fond (2) et/ou à la zone de bord (200a) de l'élément de retenue (200) le long de l'axe longitudinal (A) du générateur de gaz tubulaire (4).

9. Module de coussin gonflable selon au moins l'une quelconque des revendications précédentes, **caractérisé en ce qu'**une section médiane (8) et la section (10) inférieure allongée associée au support (3) de l'anneau de serrage (6) présentent ensemble une longueur (L) qui est inférieure à la distance entre les bords (2a) du fond (2) et les bords (3a) du support (3) en direction de l'axe longitudinal (A) du générateur de gaz tubulaire (4).

10. Module de coussin gonflable selon l'une quelconque des revendications 1 à 9, **caractérisé en ce que** le support (3) sur ses extrémités (11) et la section (10) allongée associée de l'anneau de serrage (6) présentent une pente de sorte que le déplacement de l'anneau de serrage (6) en direction du milieu du générateur de gaz tubulaire (4) permette de serrer le générateur de gaz tubulaire (4) entre le support (3) et une zone supérieure (6a) de l'anneau de serrage (6).

11. Module de coussin gonflable selon au moins l'une quelconque des revendications précédentes, **caractérisé en ce que** d'un côté l'anneau de serrage (6) et le boîtier de module (1) sont réalisés de sorte qu'une étanchéité soit assurée entre ceux-ci sur des bords (2a) du fond (2) et **en ce que** de l'autre côté l'anneau de serrage (6) et le boîtier de module (1) sont réalisés de sorte que l'étanchéité soit obtenue entre ceux-ci et le générateur de gaz tubulaire (4) sur des bords (3a) du support (3) et sur des bords d'une saillie (8a) de l'anneau de serrage (6).

12. Module de coussin gonflable selon au moins l'une quelconque des revendications précédentes, **caractérisé en ce que** l'anneau de serrage (6) peut être encliqueté par rapport au boîtier de module (1).

13. Module de coussin gonflable selon la revendication 12, **caractérisé en ce que** le boîtier de module (1) présente au moins un nez d'encliquetage (15) et l'anneau de serrage (6) présente au moins un crochet d'encliquetage (14) déformable associé.

14. Module de coussin gonflable selon au moins l'une quelconque des revendications précédentes, **caractérisé en ce que** le sac gonflable entoure le générateur de gaz tubulaire (4) et est fixé dans la position de serrage de l'anneau de serrage (6) entre le générateur de gaz tubulaire (4) et le support (3).
